# EUROPEAN PATENT APPLICATION

(11) **EP 4 697 168 A1**
(43) Date of publication of application: **18.02.2026**
(21) Application number: 24855386.9
(22) Date of filing: 29.05.2024
(51) Int. Cl.: G06F 9/50

(54) **APPLICATION PROCESS MANAGEMENT METHOD, AND DEVICE**

(30) Priority: 22.08.2023 CN 202311063466
(71) Applicant: Huawei Technologies Co., Ltd., Shenzhen, Guangdong 518129 (CN)
(72) Inventor: LI, Xuhui, Shenzhen, Guangdong 518129 (CN); JI, Kecheng, Shenzhen, Guangdong 518129 (CN); SONG, Yuanzheng, Shenzhen, Guangdong 518129 (CN); LIN, Haiming, Shenzhen, Guangdong 518129 (CN)
(74) Representative: Gill Jennings & Every LLP
(86) International application number: PCT/CN2024/096197
(87) International publication number: WO 2025/039656

(57) **Abstract**

An application process management method and a device are provided, and relate to the field of computer technologies. The method includes: A device obtains a value of a target parameter corresponding to an application process and a state of a hardware module included in the device, where the value of the target parameter is used to determine whether the application process belongs to a background process, and the state of the hardware module is used to determine whether the hardware module is used by the application process. Then, the device manages the application process based on the value of the target parameter corresponding to the application process and the state of the hardware module. In this way, the device manages the application process based on the parameter value representing whether the application process belongs to the background process and the state that is of the hardware module and that represents whether the application module is used by the application process, so that a resource occupied by an application process whose priority is increased by adjusting a parameter value can be released, and a system load can be further reduced.

## Description

### APPLICATION PROCESS MANAGEMENT METHOD AND DEVICE

This application claims priority to Chinese Patent Application No. 202311063466.1, filed with the China National Intellectual Property Administration on August 22, 2023 and entitled "APPLICATION PROCESS MANAGEMENT METHOD AND DEVICE", which is incorporated herein by reference in its entirety.

### TECHNICAL FIELD

This application relates to the field of computer technologies, and in particular, to an application process management method and a device.

### BACKGROUND

Currently, some operating systems use an ADJ to identify a priority of an application process, and kill the application process based on the priority of the application process, to release system resources. A larger value of an ADJ corresponding to an application process indicates a lower priority of the application process, and correspondingly a higher probability that the application process is killed.

To reduce a probability of being killed, some application processes usually use various mechanisms to decrease values of ADJs of the application processes, to achieve a keepalive purpose. As a result, system resources occupied by the some application processes with high priorities may fail to be released.

### SUMMARY

This application provides an application process management method and a device, so that system resources occupied by some application processes with high priorities can be released, and a system load can be further reduced.

To achieve the foregoing objective, this application uses the following technical solutions.

According to a first aspect, an application process management method is provided. The method is applied to a device, and the method includes: obtaining a value of a target parameter corresponding to an application process and a state of a hardware module included in the device, where the value of the target parameter is used to determine whether the application process belongs to a background process, and the state of the hardware module is used to determine whether the hardware module is used by the application process; and managing the application process based on the value of the target parameter corresponding to the application process and the state of the hardware module.

Based on the foregoing technical solution, the application process is managed with reference to the parameter value representing whether the application process is in the background process and the state representing whether the application process uses the hardware module. In this way, when the application process increases a priority of the application process by modifying the parameter value of the application process, the application process may be further managed based on whether the application process uses the hardware module, so that a system resource occupied by the application process by modifying the parameter value of the application process can also be released, and a system load can be further reduced. When the application process does not increase the priority of the application process by modifying the parameter value of the application process, whether the application process is a process that can be perceived by a user may also be determined based on whether the application process uses the hardware module, so that the application process that can be perceived by the user can be avoided from being killed, and user experience can be ensured.

In a possible design, obtaining the value of the target parameter corresponding to the application process and the state of the hardware module included in the device includes: obtaining the value of the target parameter corresponding to the application process; and when the value of the target parameter corresponding to the application process represents that the application process belongs to the background process, obtaining a state of a first hardware module included in the device, where the first hardware module belongs to a first-type hardware module, and the first-type hardware module is a corresponding hardware module when an application process in the device is run in a background. Based on this design, when it is determined, based on the parameter value of the application process, that the application process belongs to the background process, a state of the corresponding hardware module when the application process is run in the background is further obtained. The corresponding hardware module when the application process is run in the background is a hardware module that may be used when the application process is run in the background. When the application process uses the hardware module in the background, the application process can be perceived by the user. Further, it is determined, based on the state of the hardware module, whether the application process uses the hardware module, to manage the application process. In this way, for some application processes whose parameter values are not modified but that can be perceived by the user, a probability that these application processes are killed can be reduced, and user experience can be improved.

In a possible design, managing the application process based on the value of the target parameter corresponding to the application process and the state of the hardware module includes: if it is determined, based on the state of the first hardware module, that the first hardware module is not used by the application process, when the application process occupies a resource corresponding to the first hardware module, releasing the resource that corresponds to the first hardware module and that is occupied by the application process; or if it is determined, based on the state of the first hardware module, that the first hardware module is used by the application process, when the application process occupies a resource corresponding to the first hardware module, skipping releasing the resource that corresponds to the first hardware module and that is occupied by the application process. Based on this design, for the application process that is determined based on the parameter value and that is run in the background, when it is determined that the application process uses the first hardware module, that is, the application process may be the process that can be perceived by the user, the resource that is of the first hardware module and that is occupied by the application process is not released, so that a probability that the process that can be perceived by the user is killed can be reduced, and user experience can be improved. When it is determined that the application process does not use the first hardware module, that is, the application process may not be the process that can be perceived by the user, the resource that is of the first hardware module and that is occupied by the application process is released, so that a system load can be further reduced.

In a possible design, determining, based on the state of the first hardware module, that the first hardware module is not used by the application process includes: if a target process identifier PID does not include a PID of the application process, determining that the first hardware module is not used by the application process, where the target PID is a PID of an application process that uses the first hardware module; or determining, based on the state of the first hardware module, that the first hardware module is used by the application process includes: if a target PID includes a PID of the application process, determining that the first hardware module is used by the application process, where the target PID is the PID of the application process that uses the first hardware module. Based on this design, whether the application process uses the first hardware module may be determined based on whether the PID of the application process that uses the first hardware module includes a PID of one application process, to determine whether to release the resource that is of the first hardware module and that is occupied by the application process.

In a possible design, the first-type hardware module includes at least one of a positioning module, an audio input/output module, and a video codec module. Based on this design, the application process that uses the positioning module, the audio input/output module, the video codec module, and the like is usually the process that can be perceived by the user. In this way, a probability that the process that can be perceived by the user is killed can be reduced, and user experience can be improved.

In a possible design, obtaining the value of the target parameter corresponding to the application process and the state of the hardware module included in the device includes: obtaining the value of the target parameter corresponding to the application process; and when the value of the target parameter corresponding to the application process represents that the application process belongs to a foreground process, obtaining a state of a second hardware module included in the device, where the second hardware module belongs to a second-type hardware module, and the second-type hardware module is a corresponding hardware module when an application process in the device is run in a foreground. Based on this design, when it is determined, based on the parameter value of the application process, that the application process belongs to the foreground process, a state of the corresponding hardware module when the application process is run in the foreground is further obtained. The corresponding hardware module when the application process is run in the foreground is a hardware module that needs to be used when the application process is run in the foreground. When the application process uses the hardware module, it indicates that the application process indeed is run in the foreground. Further, it is determined, based on the state of the hardware module, whether the application process uses the hardware module, to manage the application process. In this way, for some application processes that are determined as foreground processes by adjusting parameter values but actually do not run in the foreground, system resources occupied by these application processes with high priorities can also be released, and a system load can be further reduced.

In a possible design, managing the application process based on the value of the target parameter corresponding to the application process and the state of the hardware module includes: if it is determined, based on the state of the second hardware module, that the second hardware module is not used by the application process, when the application process occupies a resource corresponding to the second hardware module, releasing the resource that corresponds to the second hardware module and that is occupied by the application process; or if it is determined, based on the state of the second hardware module, that the second hardware module is used by the application process, when the application process occupies a resource corresponding to the second hardware module, skipping releasing the resource that corresponds to the second hardware module and that is occupied by the application process. Based on this design, for some application processes that are determined as foreground processes based on parameter values, only when it is determined that these application processes indeed use the second hardware module, resources, of the second hardware module, occupied by these application processes are not released. When it is determined that these application processes do not use the second hardware module, the resources, of the second hardware module, occupied by these application processes are released. In this way, for an application process whose priority is increased by modifying a parameter value of the application process, a system resource occupied by the application process may also be released, so that a system load can be further reduced.

In a possible design, determining, based on the state of the second hardware module, that the second hardware module is not used by the application process includes: if the application process is an invisible process, determining that the second hardware module is not used by the application process; or determining, based on the state of the second hardware module, that the second hardware module is used by the application process includes: if the application process is a visible process, determining that the second hardware module is used by the application process. Based on this design, whether the application process uses the second hardware module may be determined based on whether the application process is a visible process, to determine whether to release the resource that is of the second hardware module and that is occupied by the application process.

In a possible design, the second hardware module includes a display module, and the resource corresponding to the second hardware module includes a memory resource of a graphics processing unit GPU. Based on this design, the process being run in the foreground needs to use the display module, and occupies the memory resource of the GPU. In this way, a GPU resource occupied by an application process whose priority is increased by modifying a parameter value of the application process may be released, thereby further reducing a system load.

In a possible design, obtaining the value of the target parameter corresponding to the application process and the state of the hardware module included in the device includes: obtaining the value of the target parameter corresponding to the application process; and when the value of the target parameter corresponding to the application process represents that the application process belongs to the background process, obtaining a state of an audio input/output module included in the device; and managing the application process based on the value of the target parameter corresponding to the application process and the state of the hardware module includes: when determining, based on the state of the audio input/output module, that the audio input/output module is not used by the application process, and determining that the application process occupies a resource corresponding to a video codec module, releasing the resource that corresponds to the video codec module and that is occupied by the application process; or when determining, based on the state of the audio input/output module, that the audio input/output module is used by the application process, and determining that the application process occupies a resource corresponding to a video codec module, skipping releasing the resource that corresponds to the video codec module and that is occupied by the application process.

Based on this design, when the audio input/output module is used by the application process, the application process can be perceived by the user, and the resource that is of the video codec module and that is occupied by the application process is not released, so that for a process such as a live video streaming process, user experience can be ensured. When the audio input/output module is not used by the application process, the application process is not perceived by the user, and the resource that is of the video codec module and that is occupied by the application process is released, so that in a background silent playing scenario, a system load can be reduced.

In a possible design, the target parameter includes an ADJ or a process state proState.

According to a second aspect, a device is provided. The device has a function of implementing the method according to any one of the first aspect and the designs of the first aspect. The function may be implemented by hardware, or may be implemented by hardware executing corresponding software. The hardware or the software includes one or more modules corresponding to the function. In a possible example, the device includes an obtaining unit (or referred to as an obtaining module) and a processing unit (or referred to as a processing module). The obtaining module is configured to obtain a value of a target parameter corresponding to an application process and a state of a hardware module included in the device, where the value of the target parameter is used to determine whether the application process belongs to a background process, and the state of the hardware module is used to determine whether the hardware module is used by the application process. The processing module is configured to manage the application process based on the value of the target parameter corresponding to the application process and the state of the hardware module.

In a possible design, the obtaining module is specifically configured to: obtain the value of the target parameter corresponding to the application process; and when the value of the target parameter corresponding to the application process represents that the application process belongs to the background process, obtain a state of a first hardware module included in the device, where the first hardware module belongs to a first-type hardware module, and the first-type hardware module is a corresponding hardware module when an application process in the device is run in a background.

In a possible design, the processing unit is specifically configured to: if it is determined, based on the state of the first hardware module, that the first hardware module is not used by the application process, when the application process occupies a resource corresponding to the first hardware module, release the resource that corresponds to the first hardware module and that is occupied by the application process; or if it is determined, based on the state of the first hardware module, that the first hardware module is used by the application process, when the application process occupies a resource corresponding to the first hardware module, skip releasing the resource that corresponds to the first hardware module and that is occupied by the application process.

In a possible design, the processing unit is further configured to: if a target process identifier PID does not include a PID of the application process, determine that the first hardware module is not used by the application process, where the target PID is a PID of an application process that uses the first hardware module; or the processing unit is further configured to: if a target PID includes a PID of the application process, determine that the first hardware module is used by the application process, where the target PID is the PID of the application process that uses the first hardware module.

In a possible design, the first-type hardware module includes at least one of a positioning module, an audio input/output module, and a video codec module.

In a possible design, the obtaining module is further specifically configured to: obtain the value of the target parameter corresponding to the application process; and when the value of the target parameter corresponding to the application process represents that the application process belongs to a foreground process, obtain a state of a second hardware module included in the device, where the second hardware module belongs to a second-type hardware module, and the second-type hardware module is a corresponding hardware module when an application process in the device is run in a foreground.

In a possible design, the processing unit is further specifically configured to: if it is determined, based on the state of the second hardware module, that the second hardware module is not used by the application process, when the application process occupies a resource corresponding to the second hardware module, release the resource that corresponds to the second hardware module and that is occupied by the application process; or if it is determined, based on the state of the second hardware module, that the second hardware module is used by the application process, when the application process occupies a resource corresponding to the second hardware module, skip releasing the resource that corresponds to the second hardware module and that is occupied by the application process.

In a possible design, the processing unit is further configured to: if the application process is an invisible process, determine that the second hardware module is not used by the application process; or the processing unit is further configured to: if the application process is a visible process, determine that the second hardware module is used by the application process.

In a possible design, the second hardware module includes a display module, and the resource corresponding to the second hardware module includes a memory resource of a graphics processing unit GPU.

In a possible design, the obtaining module is further configured to: obtain the value of the target parameter corresponding to the application process; and when the value of the target parameter corresponding to the application process represents that the application process belongs to the background process, obtain a state of an audio input/output module included in the device; and the processing module is further configured to: when determining, based on the state of the audio input/output module, that the audio input/output module is not used by the application process, and determining that the application process occupies a resource corresponding to a video codec module, release the resource that corresponds to the video codec module and that is occupied by the application process; or when determining, based on the state of the audio input/output module, that the audio input/output module is used by the application process, and determining that the application process occupies a resource corresponding to a video codec module, skip releasing the resource that corresponds to the video codec module and that is occupied by the application process.

In a possible design, the target parameter includes an ADJ or a process state proState.

According to a third aspect, a device is provided. The device includes a processor and a storage, the storage is coupled to the processor, the storage is configured to store computer program code, and the computer program code includes computer instructions; and when the processor reads the computer instructions from the storage, the device is enabled to perform the method according to any one of the first aspect and the designs of the first aspect. Optionally, the storage may be coupled to the processor, or may be independent of the storage.

In a possible design, the device further includes a display, and the display may be used by the device to perform a display operation.

In a possible design, the device further includes a communication interface, and the communication interface may be used by the device to communicate with another apparatus. For example, the communication interface may be a transceiver, an input/output interface, an interface circuit, an output circuit, an input circuit, a pin, a related circuit, or the like.

According to a fourth aspect, a computer-readable storage medium is provided. The computer-readable storage medium includes a computer program; and when the computer program is run on a device, the device is enabled to perform the method according to any one of the first aspect and the designs of the first aspect.

According to a fifth aspect, a computer program product is provided. The computer program product includes a computer program or instructions; and when the computer program or the instructions are run on a computer, the computer is enabled to perform the method according to any one of the first aspect and the designs of the first aspect.

According to a sixth aspect, a circuit system is provided. The circuit system includes a processing circuit, and the processing circuit is configured to perform the method according to any one of the first aspect and the designs of the first aspect.

According to a seventh aspect, a chip system is provided. The chip system includes at least one processor and at least one interface circuit, and the at least one interface circuit is configured to: perform a transceiver function, and send instructions to the at least one processor; and when the at least one processor executes the instructions, the at least one processor is enabled to perform the method according to any one of the first aspect or the second aspect and the designs of the first aspect or the second aspect.

It should be noted that, for technical effect achieved by any one of the designs of the second aspect to the seventh aspect, refer to the technical effect achieved by a corresponding design of the first aspect. Details are not described herein again.

### BRIEF DESCRIPTION OF DRAWINGS

FIG. 1 is a diagram of a structure of a device according to an embodiment of this application;
FIG. 2a is a diagram of a structure of another device according to an embodiment of this application;
FIG. 2b is a block diagram of a software structure of a device according to an embodiment of this application;
FIG. 3 is a schematic flowchart of an application process management method according to an embodiment of this application;
FIG. 4 is a diagram 1 of an interface according to an embodiment of this application;
FIG. 5A and FIG. 5B are a schematic flowchart of another application process management method according to an embodiment of this application;
FIG. 6 is a diagram 2 of an interface according to an embodiment of this application;
FIG. 7A and FIG. 7B are a schematic flowchart of another application process management method according to an embodiment of this application;
FIG. 8 is a diagram of a structure of a device according to an embodiment of this application; and
FIG. 9 is a diagram of a structure of a chip system according to an embodiment of this application.

### DESCRIPTION OF EMBODIMENTS

The following describes technical solutions in embodiments of this application in detail with reference to the accompanying drawings.

In descriptions of this application, "/" indicates an "or" relationship between associated objects, unless otherwise specified. For example, A/B may indicate A or B. In this application, "and/or" describes only an association relationship between associated objects, and indicates that three relationships may exist. For example, A and/or B may indicate the following three cases: Only A exists, both A and B exist, and only B exists, where A and B may be singular or plural.

In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example" or "for example" represents giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

Features, structures, or characteristics in this application may be combined in one or more embodiments in any appropriate manner. Sequence numbers of the processes do not mean execution sequences in various embodiments of this application. The execution sequences of the processes should be determined based on functions and internal logic of the processes, and should not be construed as any limitation on implementation processes of embodiments of this application.

In some scenarios, some optional features in embodiments of this application may be independently implemented without depending on another feature, to resolve a corresponding technical problem and achieve corresponding effect. Alternatively, in some scenarios, the optional features may be combined with another feature based on a requirement.

In this application, for same or similar parts of embodiments, mutual reference may be made between embodiments, unless otherwise specified. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. Implementations of this application are not intended to limit the protection scope of this application.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

For ease of understanding, the following first describes the technical terms and related concepts used in embodiments of this application.

### 1. Application process (or process for short)

In a computer operating system, an application process is a basic unit for resource allocation and scheduling. One application (application) may have one or more application processes. Optionally, the one or more application processes may include a main process, a subprocess, and the like. Usually, one application has only one main process, but can have a plurality of subprocesses.

### 2. Component

An Android (Android) application consists of a series of components, and the components are bound together by using a configuration file (Manifest) of the application. The Manifest of the application describes each component, a function of each component, how components interact with each other, and the like. For example, components in the Android application include an activity (Activity), a service (Service), a broadcast receiver (BroadcastReceiver), a content provider (ContentProvider), and the like.

The Activity is a display component, and mainly displays a picture to a user, and may receive input information of the user, to interact with the user. The Service is a computing component, configured to execute a series of computing tasks in a background. The BroadcastReceiver is a message component, configured to transfer messages between different components and applications. The ContentProvider is a data sharing component, configured to share data with another component, another application, and the like.

### 3. ADJ and process state (process state, procState)

Currently, the Android system keeps application processes alive for as long as possible, so that these application processes can be started more quickly, thereby meeting user experience. However, system resources (for example, memory resources) are limited. To create a new application process or run a more important process, the Android system kills some application processes to release the system resources.

Currently, the Android system determines importance of each application process based on running components in the application process and states of these components, and then determines, based on the importance of the application process, specific application processes that are to be killed. For example, the Android system first kills an application process with lowest importance, then kills an application process with second lowest importance, and so on.

In some implementation solutions, the Android system classifies application processes into five levels: a foreground process (foreground process), a visible process (visible process), a service process (service process), a background process (background process), and an empty process (empty process). The foreground process is with highest importance. Importance of the processes is in descending order. The empty process is with lowest importance.

In some other implementation solutions, the Android system identifies a priority of the application process by using an ADJ, and the priority of the application process reflects the importance of the application process. For example, a larger value of the ADJ indicates a lower priority of the application process, and lower importance of the application process. On the contrary, a smaller value of the ADJ indicates a higher priority of the application process, and higher importance of the application process.

For example, Table 1 shows some examples of the value of the ADJ provided in embodiments of this application.

**Table 1**

| ADJ level | Value | Meaning |
|---|---|---|
| NATIVE_ADJ | -1000 | Native (native) process |
| SYSTEM_ADJ | -900 | Indicate a system service (system_server) process only |
| PERSISTENT_PROC_ADJ | -800 | Persistent (persistent) system process |
| PERSISTENT_SERVICE ADJ | -700 | Associated with a system or persistent process |
| FOREGROUND_APP_ADJ | 0 | Foreground process |
| VISIBLE_APP_ADJ | 100 | Visible process |
| PERCEPTIBLE_APP_ADJ | 200 | Perceptible process, for example, music playing in a background |
| BACKUP_APP_ADJ | 300 | Backup process |
| HEAVY_WEIGHT_APP ADJ | 400 | Heavyweight process |
| SERVICE_ADJ | 500 | Service process |
| HOME_APP_ADJ | 600 | Home (Home) process |
| PREVIOUS_APP_ADJ | 700 | Previous process |
| SERVICE_B_ADJ | 800 | Service in a B List, and service process whose priority is |
| | | degraded |
| CACHED_APP_MIN_ADJ | 900 | Minimum value of an ADJ of an invisible process |
| CACHED_APP_MAX_ADJ | 906 | Maximum value of the ADJ of the invisible process |

In some other implementation solutions, the Android system further identifies the priority of the application process by using the procState. The ADJ is associated with the procState. An application process has a value of the ADJ and a procState corresponding to the value of the ADJ.

For example, Table 2 shows some examples of the procState provided in embodiments of this application.

**Table 2**

| procState level | Value | Meaning |
|---|---|---|
| PROCESS_STATE_CACHED_EMPTY | 16 | The process is in a cached (cached) state and is an empty process |
| PROCESS_STATE_CACHED_ACTIVITY_CLIENT | 15 | The process is in a cached state and is a client (client) process of another cached process (including an Activity) |
| PROCESS_STATE_CACHED_ACTIVITY | 14 | The process is in a cached state, and includes an Activity |
| PROCESS_STATE_LAST_ACTIVITY | 13 | Background process, which has a last displayed Activity |
| PROCESS_STATE_HOME | 12 | Background process, which has a Home Activity |
| PROCESS_STATE_RECEIVER | 11 | Background process, which is running a BroadcastReceiver |
| PROCESS_STATE_SERVICE | 10 | Background process, which is running a Service |
| PROCESS_STATE_HEAVY_WEIGHT | 9 | Background process, which cannot perform restoration (restore), so that killing (kill) of the process is avoided as much as possible |
| PROCESS_STATE_BACKUP | 8 | Background process, which is performing a (backup) backup/restore operation |
| PROCESS_STATE_IMPORTANT_BACKGROUND | 7 | Process that is important to a user and is imperceptible to the user |
| PROCESS_STATE_IMPORTANT_FOREGROUND | 6 | Process that is important to the |
| | | user and is perceptible to the user |
| PROCESS_STATE_TOP_SLEEPING | 5 | Same as PROCESS_STATE_TOP, but in this case, the device is in a sleep state |
| PROCESS_STATE_FOREGROUND_SERVICE | 4 | Have a foreground Service |
| PROCESS_STATE_BOUND_FOREGROUND_SERVICE | 3 | Have a foreground Service and is bound by the system |
| PROCESS_STATE_TOP | 2 | Have a top (top) Activity visible to the current user |
| PROCESS_STATE_PERSISTENT_UI | 1 | Persistent system process, which is performing a user interface (user interface, UI) operation |
| PROCESS_STATE_PERSISTENT | 0 | Persistent system process |
| PROCESS_STATE_NONEXISTENT | -1 | Non-existent process |

It may be understood that, the foregoing merely describes the ADJ and the procState of the application process by using examples. For different Android system versions or different vendors, the ADJ and the procState of the application process may be different.

### 4. Binding service (bindService)

In the Android system, a binder (binder) mechanism is a manner of communication between application processes. There are many manners for implementing communication between application processes based on the binder mechanism. For example, an Android component Service may be combined with the binder mechanism to implement cross-process communication. This communication manner may be referred to as the bindService. In the communication manner of the bindService, the Service is referred to as a server, and a component (for example, an Activity) that invokes the Service may be referred to as a client (client).

Currently, some operating systems, for example, an Android system, use the ADJ to manage the application process. Different values of the ADJ represent different states of the application process, and also represent different priorities of the application process. The Android system may kill the application process based on the value of the ADJ, to implement release of system resources (for example, include but not limited to various system resources such as a memory resource). A larger value of the ADJ of the application process indicates a lower priority of the application process, and a higher probability that the application process is killed by the Android system. For example, for application processes whose values of the ADJs are from 0 to 100, the Android system does not release graphics processing unit (graphics processing unit, GPU) resources occupied by these application processes. For another example, when system resources are insufficient, the Android system tends to kill some application processes whose values of the ADJs are greater than 900.

Therefore, to reduce a probability of being killed, some application processes usually use various mechanisms to decrease values of the ADJs of the application processes, to achieve a keepalive purpose of the application processes.

For example, an application process always maintains an interface having a visible pixel, so that the application process can be determined as a foreground process by the Android system. Correspondingly, a value of the ADJ of the application process is also set to a value corresponding to the foreground process, for example, a value 0. Then, the Android system does not release a system resource occupied by the application process.

For another example, a main application process may be bound to one or more Service processes through an interface such as a bindService, and a value of a peer ADJ may be increased between the main application process and the Service process. For example, the foregoing one or more Service processes may be application processes other than the main application process, for example, a service process or a download process. For example, if the main application process is a process A, the process A is a foreground process, a value of an ADJ of the process A is 0, and the process A is bound to a process B through a bindService, a value of an ADJ of the process B may be increased to 100. After the process A exits the foreground, because the process B is bound to the process A, and the value of the ADJ of the process B is increased to 100, the value of the ADJ of the process A that exits the foreground may be maintained between 200 and 700. In this way, a system resource occupied by the process A is not released regardless of whether the process A has a requirement for background playing, navigation, or the like.

Therefore, because the application process can adjust the value of the ADJ of the application process to a specific extent, to increase the priority of the application process, system resources occupied by some application processes with higher priorities cannot be released. For example, a GPU resource is used as an example. The Android system determines the procState of the application process based on the value of the ADJ of the application process, and releases the GPU resource occupied by the application process only when the procState indicates that the application process belongs to a background application process. However, one background application process may increase a priority of the background application process by decreasing a value of an ADJ of the background application process, so that a procState of the background application process does not belong to a procState corresponding to the background application process. In this way, a GPU resource occupied by the background application process cannot be released.

In addition, some application processes that are perceptible to the user do not increase priorities of the application processes by decreasing values of ADJs of the application processes. In this way, system resources occupied by some application processes that are with low priorities but that are perceptible to the user may be released. A background live streaming scenario is used as an example. Although an application process in the background live streaming scenario is in the background, the user can perceive the application process. However, because the application process does not decrease the value of the ADJ of the application process, when the Android system kills the application process based on the ADJ, because the priority of the application process is low, the application process may be killed, and the system resource occupied by the application process may be released. Consequently, resource release is improper, and user experience is affected.

In view of this, embodiments of this application provide an application process management method, so that system resources occupied by some application processes with high priorities can be released, thereby further reducing a system load. In addition, rationality of system resource release can be further improved, and user experience can be improved.

The technical solutions provided in embodiments of this application may be applied to various scenarios in which a priority of an application process is identified based on a value of a parameter, and then the application process is killed based on the parameter of the application process, to release a system resource. In embodiments of this application, an example in which the foregoing parameter is an ADJ is used.

The technical solutions provided in embodiments of this application may be applied to a device 100, or may be applied to a system including the device 100.

For example, the device 100 may be a mobile phone, a tablet computer, a desktop computer, a laptop computer, a handheld computer, a notebook computer, an ultra-mobile personal computer (ultra-mobile personal computer, UMPC), a netbook, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. The wearable device includes but is not limited to a smartwatch, a smart band, a smart anklet, and the like. In some embodiments, the device 100 may be a fixed device, or may be a portable device. An operating system installed on the device 100 includes but is not limited to Android^{®}, HarmonyOS^{®}, Linux^{®}, or another operating system having a similar application process killing mechanism. A specific type of the device 100 and the operating system installed on the device 100 are not limited in this application.

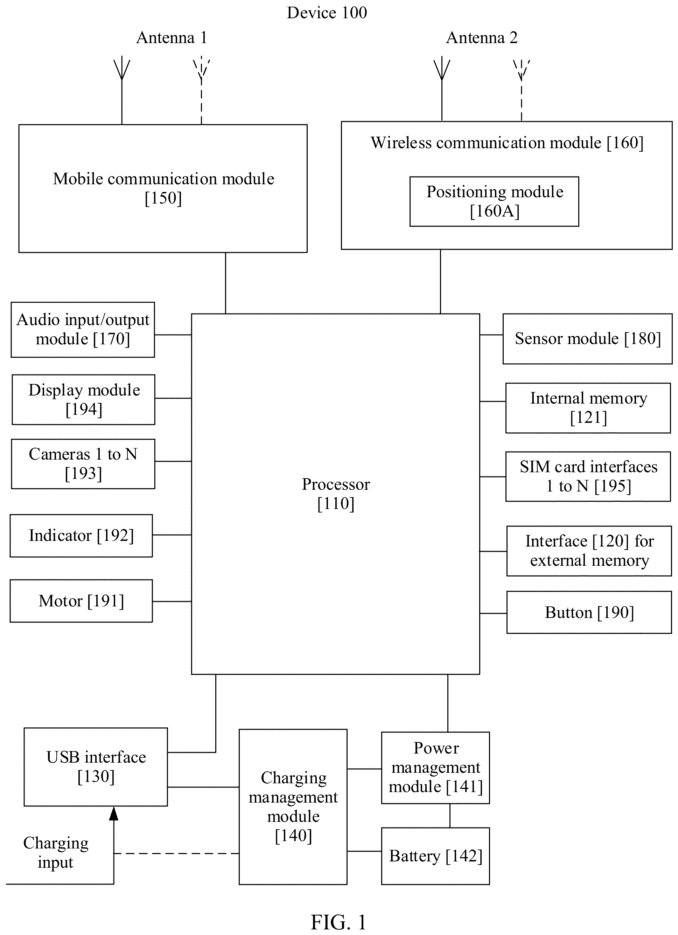

For example, the device 100 is a mobile phone. FIG. 1 is a diagram of a structure of a device 100 according to an embodiment of this application.

As shown in FIG. 1, the device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio input/output module 170, a sensor module 180, a button 190, a motor 191, an indicator 192, a camera 193, a display module 194, a subscriber identity module (subscriber identity module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec module, a digital signal processor (digital signal processor, DSP), a baseband processor, and/or a neural-network processing unit (neural-network processing unit, NPU). Different processing units may be independent components, or may be integrated into one or more processors. The controller may generate an operation control signal based on an instruction operation code and a time sequence signal, to complete control of instruction fetching and instruction execution.

A storage may be further disposed in the processor 110, and is configured to store instructions and data. In some embodiments, the storage in the processor 110 is a cache memory. The storage may store instructions or data that is just used or cyclically used by the processor 110. If the processor 110 needs to use the instructions or the data again, the processor may directly invoke the instructions or the data from the storage. This avoids repeated access, reduces waiting time of the processor 110, and improves system efficiency.

In some embodiments, the processor 110 may include one or more interfaces.

The charging management module 140 is configured to receive a charging input from a charger. The charger may be a wireless charger or a wired charger.

The power management module 141 is configured to connect to the battery 142, the charging management module 140, and the processor 110. The power management module 141 receives an input from the battery 142 and/or the charging management module 140, and supplies power to the processor 110, the internal memory 121, the display module 194, the camera 193, the wireless communication module 160, and the like.

A wireless communication function of the device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the device 100 may be configured to cover one or more communication frequency bands. Different antennas may be further reused, to improve antenna utilization. For example, the antenna 1 may be reused into a diversity antenna of a wireless local area network. In some other embodiments, the antenna may be used in combination with a tuning switch.

The mobile communication module 150 may provide a wireless communication solution that is applied to the device 100 and that includes 2G/3G/4G/5G, or the like. The mobile communication module 150 may include at least one filter, a switch, a power amplifier, a low noise amplifier (low noise amplifier, LNA), and the like.

The wireless communication module 160 may provide a wireless communication solution that is applied to the device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, the antenna 1 and the mobile communication module 150 in the device 100 are coupled, and the antenna 2 and the wireless communication module 160 in the device 100 are coupled, so that the device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

In some embodiments of this application, the wireless communication module 160 may include a positioning module 160A, and the positioning module 160A may be configured to implement functions such as navigation and positioning of the device 100. For example, the positioning module 160A may include but is not limited to one or more of a GPS module, a BeiDou module, and the like.

The device 100 implements a display function through a GPU, the display module 194, the application processor, and the like. The GPU is a microprocessor for image processing and is connected to the display module 194 and the application processor. The GPU is configured to: perform mathematical and geometric computing, and render an image. The processor 110 may include one or more GPUs, which execute program instructions to generate or change display information.

The display module 194 is configured to display an image, a video, and the like. In some embodiments of this application, the display module 194 may include a display, and the display includes a display panel.

The device 100 may implement a photographing function through the ISP, the camera 193, the video codec module, the GPU, the display module 194, the application processor, and the like.

The camera 193 is configured to capture a static image or a video. In some embodiments, the device 100 may include one or N cameras 193, where N is a positive integer greater than 1.

The video codec module (or referred to as a video codec) is configured to compress or decompress a digital video. The device 100 may support one or more video codec modules. In this way, the device 100 may play or record videos in a plurality of coding formats, for example, moving picture experts group (moving picture experts group, MPEG)-1, MPEG-2, MPEG-3, and MPEG-4. For example, the video codec module may include a video codec chip.

The interface 120 for external memory may be used to connect to an external storage card, for example, a micro SD card, to extend a storage capability of the device 100. The external storage card communicates with the processor 110 through the interface 120 for external memory, to implement a data storage function.

The internal memory 121 may be configured to store computer-executable program code. The executable program code includes instructions. The internal memory 121 may include a program storage area and a data storage area.

The device 100 may implement an audio function, for example, music playing and recording, through the audio input/output module 170, the audio input/output module, the application processor, and the like. For example, the audio input/output module 170 may include a speaker, a receiver, a microphone, and the like.

The audio input/output module 170 is configured to convert digital audio information into an analog audio signal for output, and is also configured to convert an analog audio input into a digital audio signal. In some embodiments, the audio input/output module 170 may be disposed in the processor 110, or a part of functional modules of the audio input/output module 170 are disposed in the processor 110.

Optionally, the sensor module 180 may include one or more of a pressure sensor, a gyroscope sensor, a barometric pressure sensor, a magnetic sensor, an acceleration sensor, a distance sensor, a fingerprint sensor, a temperature sensor, an ambient light sensor, a bone conduction sensor, and the like.

The button 190 includes a power button, a volume button, and the like. The button 190 may be a mechanical button, or may be a touch button.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

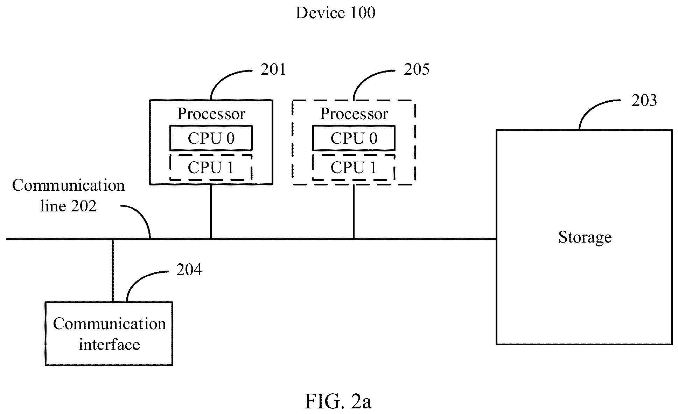

It may be understood that the structure of the device 100 in this embodiment of this application is merely described above by using the mobile phone as an example, but does not constitute a limitation on a structure and a form of the device 100. In some other embodiments of this application, the structure of the device 100 may alternatively be presented in a form shown in FIG. 2a. For example, FIG. 2a is a diagram of a structure of another device 100 according to an embodiment of this application. The device 100 includes at least one processor 201, a communication line 202, a storage 203, and at least one communication interface 204.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a path on which information is transferred between the foregoing components.

The communication interface 204 is configured to communicate with another device. In embodiments of this application, the communication interface may be a module, a circuit, a bus, an interface, a transceiver, or another apparatus that can implement a communication function, and is configured to communicate with the another device. Optionally, when the communication interface is a transceiver, the transceiver may be an independently disposed transmitter, and the transmitter may be configured to send information to the another device. Alternatively, the transceiver may be an independently disposed receiver, and is configured to receive information from the another device. Alternatively, the transceiver may be a component that integrates information sending and receiving functions. A specific implementation of the transceiver is not limited in embodiments of this application.

The storage 203 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile optical disc, a Blu-ray disc, and the like), a magnetic disk storage medium or another magnetic storage device, or any other medium that can be used to carry or store expected program code in a form of instructions or a data structure and that can be accessed by a computer, but is not limited thereto. The storage 203 may exist independently, and be connected to the processor 201 through the communication line 202. The storage 203 may alternatively be integrated with the processor 201.

The storage 203 is configured to store computer-executable instructions for implementing the solutions of this application, and the processor 201 controls the execution. The processor 201 is configured to execute the computer-executable instructions stored in the storage 203, to implement the method provided in the following embodiments of this application.

Optionally, the computer-executable instructions in embodiments of this application may also be referred to as application program code, instructions, a computer program, or another name. This is not specifically limited in embodiments of this application.

During specific implementation, in an embodiment, the processor 201 may include one or more CPUs, for example, a CPU 0 and a CPU 1 in FIG. 2a.

During specific implementation, in an embodiment, the device 100 may include a plurality of processors, for example, the processor 201 and a processor 205 in FIG. 2a. Each of the processors may be a single-core (single-CPU) processor, or may be a multi-core (multi-CPU) processor. The processor herein may be one or more devices, circuits, and/or processing cores configured to process data (for example, computer program instructions).

The device 100 may be a general-purpose device or a dedicated device. A type of the device 100 is not limited in embodiments of this application. The device 100 may be a device having a structure similar to that in FIG. 2a.

In some other embodiments of this application, the device 100 may include more or fewer components than those shown in FIG. 1 and FIG. 2a, or some components may be combined, or some components may be split, or some components may be replaced, or different component arrangements may be used. The components shown in the figure may be implemented by hardware, software, or a combination of software and hardware.

In some embodiments, a software system of the device 100 may use a layered architecture, an eventdriven architecture, a microkernel architecture, a microservice architecture, or a cloud architecture. In embodiments of the present invention, an Android system of a layered architecture is used as an example to illustrate the software structure of the device 100.

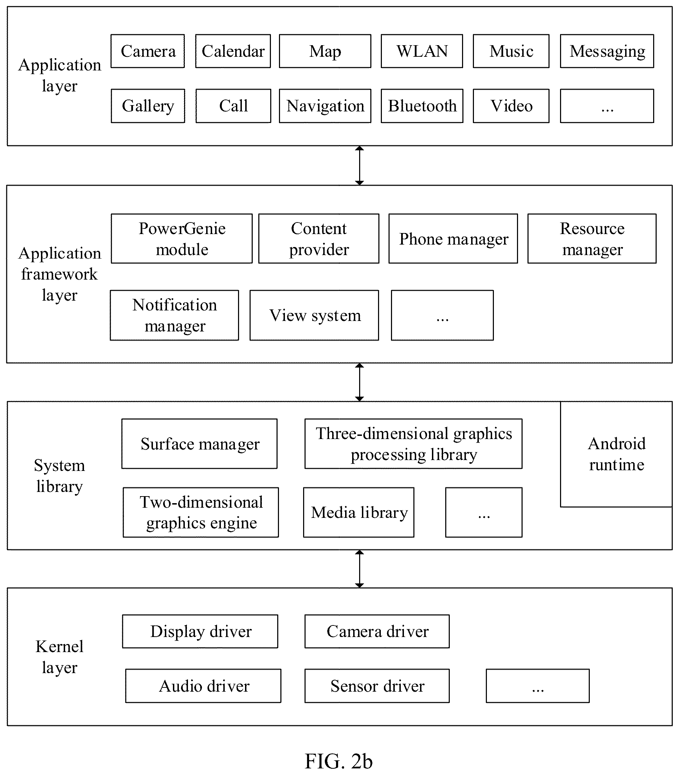

FIG. 2b is a block diagram of a software structure of a device 100 according to an embodiment of the present invention.

In a layered architecture, software is divided into several layers, and each layer has a clear role and task. Layers communicate with each other through a software interface. In some embodiments, the Android system includes four layers: an application layer, an application framework layer, an Android runtime (Android runtime) and system library, and a kernel layer from top to bottom.

The application layer may include a series of application packages.

As shown in FIG. 2b, the application package may include applications such as Camera, Gallery, Calendar, Call, Map, Navigation, WLAN, Bluetooth, Music, Video, and Messaging. In some embodiments of this application, these application processes may start one or more application processes, and these application processes may be run in a foreground of the device 100, or may be run in a background of the device 100.

The application framework layer provides an application programming interface (application programming interface, API) and a programming framework for an application at the application layer. The application framework layer includes some predefined functions.

As shown in FIG. 2b, the application framework layer may include a PowerGenie module, a content provider, a view system, a phone manager, a resource manager, a notification manager, and the like.

The PowerGenie module may be configured to manage power consumption of the device 100. For example, a software resource and a hardware resource that consume power in the device 100 are identified, and the software resource and the hardware resource are properly allocated, to reduce background power consumption and the like of the device 100. In some embodiments of this application, the PowerGenie module may store a hardware module use list. The hardware module use list may include an identifier (for example, a process identifier (process identifier, PID), which may be referred to as a target PID) of one or more application processes that are using a hardware module.

For example, the hardware module use list may include but is not limited to one or more of an audio input/output module use list, a video codec module use list, a GPS module use list, and the like. The audio input/output module use list includes an identifier of one or more application processes that are using an audio input/output module (for example, performing audio outputting or audio inputting). The video codec module use list includes an identifier of one or more application processes that are using a video codec module (for example, performing an encoding/decoding operation). The GPS module use list includes an identifier of one or more application processes that are using a GPS module (for example, performing operations such as navigation and positioning).

It may be understood that in this embodiment, an example in which a positioning module is a GPS module is used. In another embodiment, when the positioning module is implemented as another module (for example, a BeiDou module), correspondingly, the PowerGenie module may further store a list of application processes that use the another module.

The content provider is configured to: store and obtain data, and enable the data to be accessed by an application. The data may include a video, an image, an audio, calls that are made and answered, a browsing history and bookmarks, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring user interaction.

The Android runtime includes a core library and a virtual machine. The Android runtime is responsible for scheduling and management of the Android system.

The core library includes two parts: a performance function that needs to be called in Java language and a core library of Android.

The application layer and the application framework layer run in the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is configured to manage a display subsystem and provide fusion of two-dimensional and three-dimensional graphics layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for two-dimensional drawing.

The kernel layer is a layer between hardware and software. The kernel layer includes at least a display driver, a camera driver, an audio driver, and a sensor driver.

It may be understood that layer division and modules included in layers shown in FIG. 2b are merely examples for description, and do not constitute a limitation on embodiments of this application. During actual application, the device 100 may further have another layer division manner, or include more or fewer layers than those shown in FIG. 2b. Levels to which the modules belong can also be different. For example, the PowerGenie module may also be located at the application layer.

It may be further understood that in the foregoing embodiment, an example in which a power saving management module stores one or more of an audio input/output module use list, a video codec module use list, and a GPS module use list is used. In another embodiment, the audio input/output module use list, the video codec module use list, the GPS module use list, and the like may alternatively be stored at another location. For example, the audio input/output module use list may be stored in an audio manager (not shown in the figure) at the framework layer, and the GPS module use list may be stored in a resource manager at the framework layer. The audio manager may provide some audio-related services, including but not limited to volume management, audio device management, mode management, audio data collection, audio data playing, and the like.

All technical solutions in the following embodiments may be implemented in a device having a structure shown in FIG. 1, FIG. 2a, and FIG. 2b.

It may be understood that in the following embodiments, the device 100 is used as a device for description, and the device may perform a part or all of steps in embodiments of this application. These steps or operations are merely examples. In embodiments of this application, other operations or variations of various operations may be further performed. In addition, the steps may be performed in different sequences presented in embodiments of this application, and not all the operations in embodiments of this application may need to be performed.

Embodiments of this application provide an application process management method. For an application process existing in a device, the device can determine, based on an ADJ of the application process, a procState of the application process, a working state of a hardware module included in the device, and the like, whether to release a system resource occupied by the application process. It may be understood that the device may include one or more hardware modules, for example, including but not limited to a display module, an audio input/output module, a positioning module, a video codec module, and the like. The positioning module may include but is not limited to a GPS module, a BeiDou module, and the like. The working state of the hardware module may be a state in which the hardware module is used by the application process. For example, the application process may use an audio input/output module to perform audio outputting, audio inputting, and the like, and use a video codec module to perform encoding and/or decoding and the like.

Optionally, one hardware module may be simultaneously used by one or more application processes. The working state of the hardware module may be specifically whether the hardware module is used by the application process, and which application processes specifically use the hardware module. It may be understood that, in embodiments of this application, that the hardware module is used by the application process may mean that the application process is being run by using a resource corresponding to the hardware module.

In some embodiments, if the hardware module included in the device is used by a specific application process, the device may not release a resource that corresponds to the hardware module and that is occupied by the application process; or if the hardware module included in the device is not used by a specific application process, the device may release a resource that corresponds to the hardware module and that is occupied by the application process.

In some embodiments, for one application process, whether one hardware module (for example, including but not limited to the audio input/output module, the positioning module, the video codec module, and the like) is used by the application process may be determined based on the hardware module use list included in the PowerGenie module shown in FIG. 2b. For example, when an identifier, of an application process that is using the hardware module, included in the hardware module use list includes the identifier of the application process, it may be determined that the hardware module is used by the application process; or when an identifier, of an application process that is using the hardware module, included in the foregoing hardware module use list does not include the identifier of the application process, it may be determined that the hardware module is not used by the application process.

In some other embodiments, for one application process, whether one hardware module is used may be determined based on a process record (ProcessRecord) corresponding to the application process. For example, when a ProcessRecord corresponding to one application process identifies that the application process is a visible process, for example, a "visible" attribute included in a process record state (ProcessRecordState) class corresponding to the ProcessRecord is true, it may be determined that the display module is used by the application process. When a ProcessRecord corresponding to one application process identifies that the application process is an invisible process, for example, a "visible" attribute included in a ProcessRecordState class corresponding to the ProcessRecord is false, it may be determined that the display module is not used by the application process.

In some implementations, there may be one or more Activities running in a same application process, and a ProcessRecord corresponding to the application process may include a "visible" attribute of each Activity running in the application process. If there is an Activity whose "visible" attribute is true in the Activity running in the application process, the ProcessRecord identifies that the application process is a visible process. On the contrary, if "visible" attributes of all Activities running in the application process are false, the ProcessRecord identifies that the application processes are invisible processes.

It may be understood that, for each application process, there is a corresponding ProcessRecord in an activity manager service (activity manager service, AMS). The ProcessRecord records all information of the application process, for example, including but not limited to a name and a PID of the application process, and a component (for example, including but not limited to an Activity, a Service, and the like) running in the application process. The AMS is a module that manages the application process in an operating system, and the AMS may be responsible for creation, destroying, and the like of the application process.

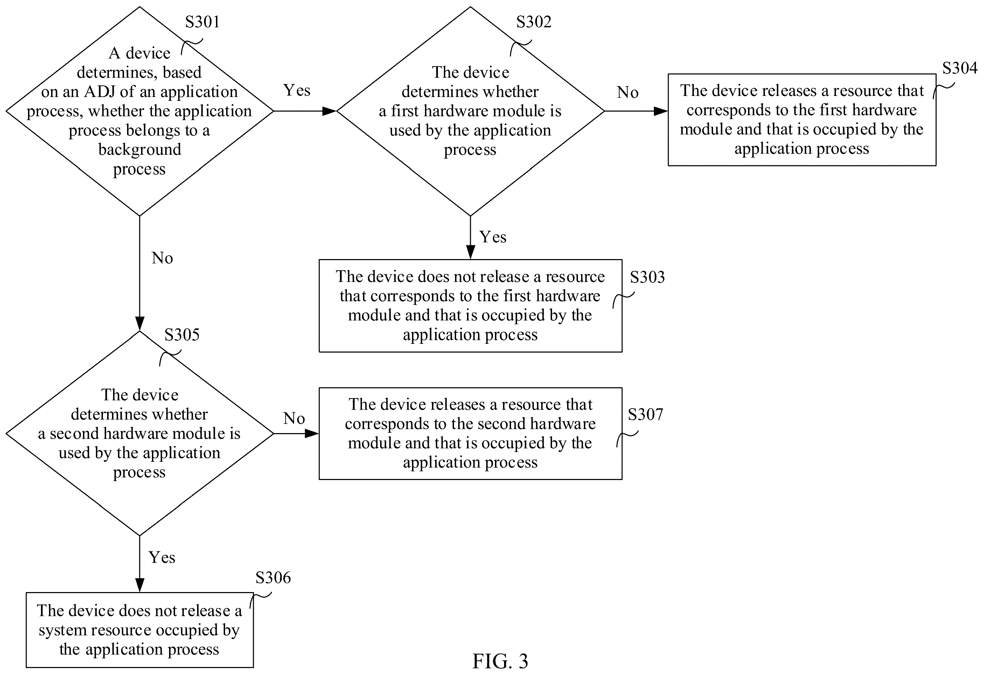

In some embodiments, the device may first determine, based on an ADJ of the application process, whether the application process belongs to a foreground process or a background process; and then, determine, based on a state of the hardware module included in the device, whether to release the system resource occupied by the application process. In this embodiment, FIG. 3 is a schematic flowchart of an application process management method according to an embodiment of this application. As shown in FIG. 3, the method includes the following steps.

S301: A device determines, based on an ADJ of an application process, whether the application process belongs to a background process.

In some embodiments, when a value of the ADJ of the application process is greater than or equal to a first threshold, the device may determine that the application process belongs to the background process. In some specific implementations, the first threshold may be 500. Certainly, with different versions of an operating system of the device or for different vendors, the first threshold may alternatively be another value.

If the device determines, based on the ADJ of the application process, that the application process belongs to the background process, that is, the application process belongs to the background process, step S302 is performed. If the device determines, based on the ADJ of the application process, that the application process does not belong to the background process, that is, the application process does not belong to the background process, or the application process belongs to a foreground process, step S305 is performed.

It may be understood that, in this embodiment, that the device determines, based on the ADJ of the application process, whether the application process belongs to the background process is used as an example. In another embodiment, the device may alternatively determine, based on a procState of the application process, whether the application process is the background process. In some embodiments, when a value of the procState of the application process is greater than or equal to a second threshold, the device may determine that the application process belongs to the background process. In some specific implementations, the second threshold may be 7. Certainly, with different versions of the operating system of the device or for different vendors, the second threshold may alternatively be another value.

It may be further understood that, when it is determined, based on the ADJ or the procState of the application process, that the application process belongs to the foreground process, the application process may not be run in a foreground, but be run in a background. The application process may be enabled to belong to the foreground process by decreasing the ADJ or the procState of the application process.

S302: The device determines whether a first hardware module is used by the application process.

Optionally, there may be one or more first hardware modules. In some embodiments, the first hardware module belongs to a first-type hardware module. The first-type hardware module may be a hardware module that may be used when the application process is run in the background. For example, the first-type hardware module may include but is not limited to one or more of a positioning module, an audio input/output module, a video codec module, and the like. For example, if an application process is performing a navigation operation, the application process may use a positioning module. For another example, if an application process is playing audio, the application process may use an audio input/output module, a video codec module, and the like. For another example, if an application process is performing operations such as encoding and/or decoding, the application process uses a video codec module.

In some embodiments, for the first hardware module, the device may determine, based on a hardware module use list corresponding to the first hardware module, whether the first hardware module is used by the application process. For specific implementations of this embodiment, refer to the foregoing descriptions.

In some embodiments, the first hardware module may be a hardware module that is in the first-type hardware module and that has a resource (for example, including but not limited to a memory resource) occupied by the application process. It may be understood that the hardware module that has a resource occupied by the application process may be a part of or all hardware modules included in the first-type hardware module. Optionally, before performing step S302, the device may further first determine specific resources that correspond to the first hardware module and that are occupied by the application process, and then determine whether a hardware module that has a resource occupied by the application process is used by the application process.

In some implementations, the hardware module may store an identifier of the application process that occupies the resource corresponding to the hardware module, and may determine, based on the identifier, of the application process that occupies the resource corresponding to the hardware module, stored in the hardware module, whether the application process occupies the resource corresponding to the hardware module. For example, for an application process, when the identifier, of the application process that occupies the resource corresponding to the hardware module, stored in the hardware module includes an identifier of the application process, it may be determined that the application process occupies the resource corresponding to the hardware module. On the contrary, it may be determined that the application process does not occupy the resource corresponding to the hardware module.

If the device determines that the first hardware module is used by the application process, that is, the first hardware module is used by the application process, the device performs step S303. If the device determines that the first hardware module is not used by the application process, that is, the first hardware module is not used by the application process, the device performs step S304.

S303: The device does not release a resource that corresponds to the first hardware module and that is occupied by the application process.

Optionally, there may be one or more application processes that occupy the resource corresponding to the first hardware module, including the application process. The device may not release the resource that corresponds to the first hardware module and that is occupied by the application process.

S304: The device releases a resource that corresponds to the first hardware module and that is occupied by the application process.

Optionally, there may be one or more application processes that occupy the resource corresponding to the first hardware module, including the application process. The device may release only the resource that corresponds to the first hardware module and that is occupied by the application process.

It may be understood that, step S302 to step S304 are performed by using an example in which the device determines only whether the first hardware module that is in the first-type hardware module and that has the resource occupied by the application process is used by the application process. In another embodiment, the device may alternatively determine whether all hardware modules included in the first-type hardware module are used by the application process, and then determine whether to release resources corresponding to the hardware modules. For example, when determining that a specific hardware module in the first-type hardware module is not used by the application process, the device determines whether the application process occupies a resource corresponding to the hardware module. When determining that the application process occupies the resource, the device releases the resource that is of the corresponding hardware module and that is occupied by the application process. When determining that no resource is occupied, the device does not need to perform a resource release operation.

S305: The device determines whether a second hardware module is used by the application process.

Optionally, there may be one or more second hardware modules. In some embodiments, the second hardware module belongs to a second-type hardware module. The second-type hardware module may be a hardware module that may be used when the application process is run in a foreground. For example, the second-type hardware module may include but is not limited to a display module. For example, if an application process displays an interface in the foreground, the application process may use the display module.

In some embodiments, for the second hardware module, the device may determine, based on whether the application process is a visible process, whether the second hardware module is used by the application process. For example, the device may determine, based on a "visible" attribute stored in a ProcessRecordState class corresponding to a ProcessRecord corresponding to the application process, whether an application process is a visible process. For specific implementations of this embodiment, refer to the foregoing descriptions.

In some embodiments, the second hardware module is also a hardware module that has a resource (for example, including but not limited to a memory resource) occupied by the application process. It may be understood that the hardware module that has a resource occupied by the application process may be a part of or all hardware modules included in the second-type hardware module. Optionally, before performing step S305, the device may further first determine specific resources, corresponding to the second hardware module, occupied by the application process, and then determine whether a hardware module that has a resource occupied by the application process is used by the application process.

If the device determines that the second hardware module is used by the application process, that is, the second hardware module is used by the application process, the device performs step S306. If the device determines that the second hardware module is not used by the application process, that is, the second hardware module is not used by the application process, the device performs step S307.

S306: The device does not release a system resource occupied by the application process.

In some embodiments, the system resource occupied by the application process may include only the resource corresponding to the second hardware module, and the device may not release the resource that corresponds to the second hardware module and that is occupied by the application process.

In some other embodiments, in addition to the resource of the first hardware module, the application process may further occupy the resource corresponding to the second hardware module. In this case, the device may not release the resource corresponding to the first hardware module and the resource corresponding to the second hardware module that are occupied by the application process.

S307: The device releases the resource that corresponds to the second hardware module and that is occupied by the application process.

Optionally, there may be one or more application processes that occupy the resource corresponding to the second hardware module, including the application process. The device may release only the resource that corresponds to the second hardware module and that is occupied by the application process. For example, the resource that corresponds to the second-type hardware module and that is occupied by the application process may include but is not limited to a memory resource of a GPU and the like.

It may be understood that step S305 to step S307 are performed by using an example in which the device determines only whether the second hardware module that is in the second-type hardware module and that has the resource occupied by the application process is used by the application process. In another embodiment, the device may alternatively determine whether all hardware modules included in the second-type hardware module are used by the application process, and then determine whether to release resources corresponding to the hardware modules. For example, when determining that a specific hardware module in the second-type hardware module is not used by the application process, the device determines whether the application process occupies a resource corresponding to the hardware module. When determining that the application process occupies the resource, the device releases the resource that corresponds to the corresponding hardware module and that is occupied by the application process. When determining that no resource is occupied, the device does not need to perform a resource release operation.

In some embodiments, after the device determines, based on the ADJ or the procState of the application process, that the application process is a background process, if it is determined that the application process occupies the resource corresponding to the second hardware module, the device may further directly release the resource that corresponds to the second-type hardware module and that is occupied by the application process.

It may be understood that, in the embodiment shown in FIG. 3, when it is determined, based on the ADJ or the procState of the application process, that the application process does not belong to a background process, it is determined whether the first-type hardware module is used by the application process, to release the resource that corresponds to the first-type hardware module and that is occupied by the application process. In another embodiment, when it is determined, based on the ADJ or the procState of the application process, that the application process does not belong to a background process, in addition to determining whether the first-type hardware module is used by the application process, it may be further determined whether the second-type hardware module is used by the application process, to release both the resource corresponding to the first-type hardware module and the resource corresponding to the second-type hardware module that are occupied by the application process.

In some embodiments, the device may perform the solution shown in FIG. 3 when detecting that the application process is switched from being run in the foreground to being run in the background. In some other embodiments, the device may perform the solution shown in FIG. 3 when killing the application process being run in the system. An occasion on which the device releases a system resource is not limited in this embodiment of this application.

Based on the foregoing technical solution, with reference to the ADJ or the procState corresponding to the application process and an actual state of the hardware module, it is determined whether to release the resource that is of the corresponding hardware module and that is occupied by the application process. In this way, when the application process increases a priority of the application process by decreasing a value of the ADJ or the procState, for example, for an application process that belongs to a foreground process and is determined based on the value of the ADJ, whether to release a resource occupied by the application process with a higher priority may be determined based on a state of the second hardware module, namely, a state indicating whether the second hardware module is used by the application process. When the hardware module is not used by the application process, the resource that is of the corresponding hardware module and that is occupied by the application process can be released, so that the system resource occupied by the application process whose priority is increased by decreasing the value of the ADJ or the procState can be released, and a system load can be further reduced.

In addition, for some application processes whose priorities are not increased by decreasing the value of the ADJ or the procState, these application processes can be perceived by a user, for example, application processes of background playing, background navigation, and background live streaming, but it is determined, based on the value of the ADJ, that the application processes belong to a background process. In this case, whether to release a resource occupied by an application process with a low priority may be determined based on a state of the first hardware module, namely, a state indicating whether the first hardware module is used by the application process. When the hardware module is used by the application process, the resource that is of the corresponding hardware module and that is occupied by the application process is not released, so that a priority of the application process that can be perceived by the user can be increased, a probability that the application process that can be perceived by the user is killed can be reduced, and user experience can be improved.

The following describes the technical solutions provided in embodiments of this application with reference to specific scenarios.

Scenario 1: A home screen live wallpaper process of a mobile phone is switched from being run in a foreground to being run in a background.

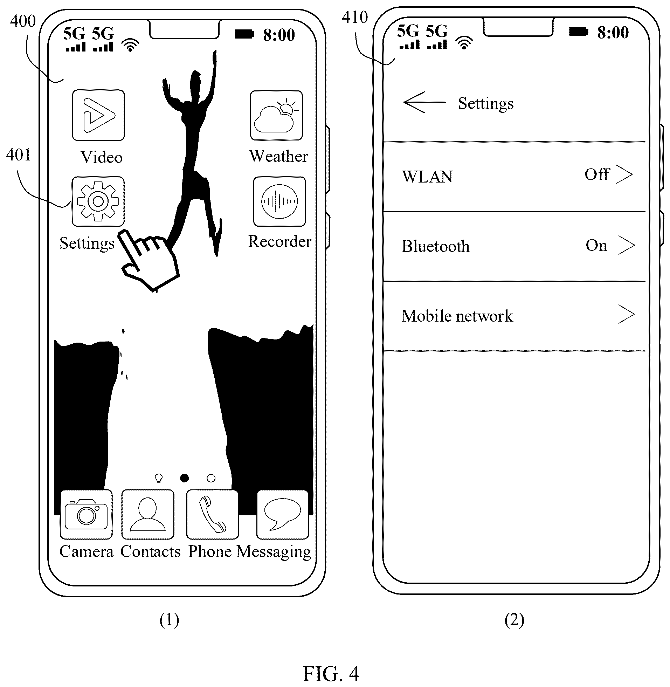

For example, when the home screen live wallpaper process is run in the foreground of the mobile phone, the mobile phone may display a main interface (or referred to as a home screen) shown in (1) in FIG. 4, where a live wallpaper 400 may be displayed on the main interface of the mobile phone. Optionally, the main interface shown in (1) in FIG. 4 may further display an icon of one or more applications, including but not limited to an icon of a video application and an icon of a weather application. Examples are not enumerated herein again for description. Icons of different applications may be used to open running interfaces of the corresponding applications, to implement functions of the corresponding applications.

When the mobile phone detects an operation used to switch the home screen live wallpaper process to be run in the background, for example, the operation may include but is not limited to various button operations, voice operations, gesture operations, and the like. For example, the operation is an operation of opening a running interface of another application (for example, a tap operation on an icon 401 of a setting application shown in (1) in FIG. 4). In response to the operation, the mobile phone switches the home screen live wallpaper process to be run in the background, and runs a process of the setting application in the foreground. For example, the mobile phone may display a running interface 410 shown in (2) in FIG. 4.

Optionally, in this scenario, a system resource occupied by the home screen live wallpaper process may include a memory resource of a GPU, a memory resource of a video codec module, and the like. In some embodiments, the GPU module may store a PID of an application process that occupies the memory resource of the GPU module, and the mobile phone may determine, based on the PID, of the application process, stored in the GPU module, whether the home screen live wallpaper process occupies the GPU module. For example, if the PID, of the application process, stored in the GPU module does not include a PID of the home screen live wallpaper process, it may be determined that the home screen live wallpaper process does not occupy the memory resource corresponding to the GPU module; or if the PID, of the application process, stored in the GPU module includes a PID of the home screen live wallpaper process, it may be determined that the home screen live wallpaper process occupies the memory resource corresponding to the GPU module. Similarly, whether the home screen live wallpaper process occupies the memory resource corresponding to the video codec module may also be determined based on the PID, of the application process that occupies the memory resource corresponding to the video codec module, stored in the video codec module.

In this embodiment, it is determined that the home screen live wallpaper process occupies the memory resource of the GPU and the memory resource of the video codec module.

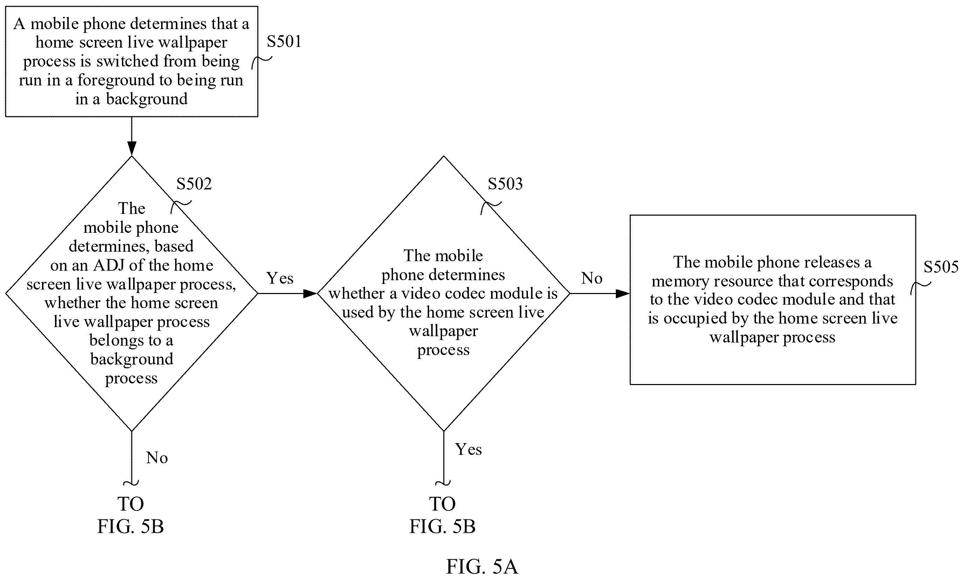

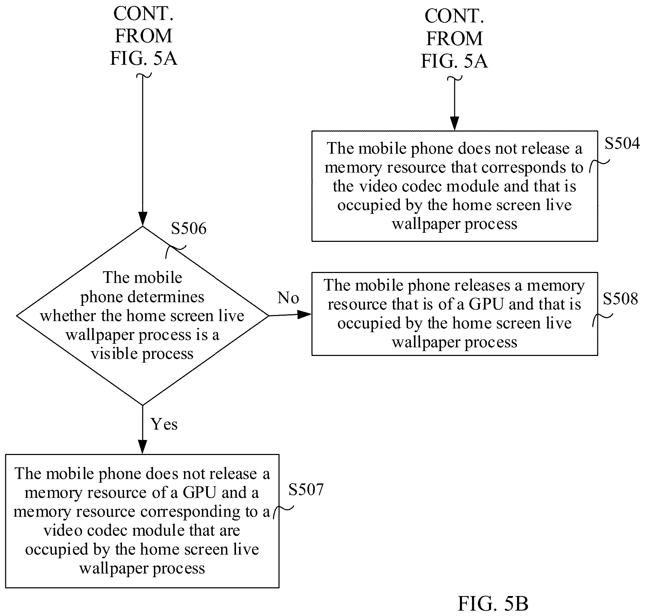

In this scenario, as a specific embodiment, FIG. 5A and FIG. 5B are a schematic flowchart of another application process management method according to an embodiment of this application. As shown in FIG. 5A and FIG. 5B, the method includes the following steps.

S501: A mobile phone determines that a home screen live wallpaper process is switched from being run in a foreground to being run in a background.

For a specific implementation of determining that an application process is switched from being run in the foreground to being run in the background, refer to an implementation in a related technology.

In some embodiments, it takes specific time for the application process to be switched from the foreground to the background. Therefore, when identifying that the home screen live wallpaper process is switched to be run in the background, the mobile phone may wait for a period of time, for example, wait for delay (delay) time of several seconds. When the application process is completely switched to the background, step S502 and subsequent steps are performed.

It may be understood that, in this embodiment, that a resource is released when the home screen live wallpaper process is switched from being run in the foreground to being run in the background is used as an example. The mobile phone may also use a manner shown in FIG. 3. For example, when the application process is killed, the resource occupied by the home screen live wallpaper process is released. This is not limited in this embodiment of this application.

S502: The mobile phone determines, based on an ADJ of the home screen live wallpaper process, whether the home screen live wallpaper process belongs to a background process.

For example, when the ADJ of the home screen live wallpaper process is greater than 500, it may be determined that the home screen live wallpaper process is the background process; or when the home screen live wallpaper process is less than 500, it may be determined that the home screen live wallpaper process is a foreground process.

If the mobile phone determines, based on the ADJ of the home screen live wallpaper process, that the home screen live wallpaper process belongs to the background process, that is, the home screen live wallpaper process belongs to the background process, step S503 is performed. If the mobile phone determines, based on the ADJ of the home screen live wallpaper process, that the home screen live wallpaper process does not belong to the background process, that is, the home screen live wallpaper process does not belong to the background process, step S506 is performed.

Certainly, the mobile phone may also determine, based on a procState of the home screen live wallpaper process, whether the home screen live wallpaper process belongs to the background process. For details, refer to the related implementation described in FIG. 3.

S503: The mobile phone determines whether a video codec module is used by the home screen live wallpaper process.

For example, if the home screen live wallpaper process is performing an encoding operation and/or a decoding operation, it indicates that the video codec module is used by the home screen live wallpaper process.

In some embodiments, the mobile phone may determine, by using a video codec module use list stored in the PowerGenie module in FIG. 2b, whether the video codec module is used by the home screen live wallpaper process. For example, if a PID, of an application process that is using the video codec module, included in the video codec module use list includes a PID of the home screen live wallpaper process, it may be determined that the video codec module is used by the home screen live wallpaper process; or if a PID, of an application process that is using the video codec module, included in the video codec module use list does not include a PID of the home screen live wallpaper process, it may be determined that the video codec module is not used by the home screen live wallpaper process.

If the mobile phone determines that the video codec module is used by the home screen live wallpaper process, that is, the video codec module is used by the home screen live wallpaper, step S504 is performed. If the mobile phone determines that the video codec module is not used by the home screen live wallpaper process, that is, the video codec module is not used by the home screen live wallpaper, step S505 is performed.

S504: The mobile phone does not release a memory resource that corresponds to the video codec module and that is occupied by the home screen live wallpaper process.

S505: The mobile phone releases a memory resource that corresponds to the video codec module and that is occupied by the home screen live wallpaper process.

S506: The mobile phone determines whether the home screen live wallpaper process is a visible process.

For example, when the mobile phone determines that a "visible" attribute corresponding to the home screen live wallpaper process is true, the mobile phone may determine that the home screen live wallpaper process is a visible process; or when the mobile phone determines that a "visible" attribute corresponding to the home screen live wallpaper process is false, the mobile phone may determine that the home screen live wallpaper process is an invisible process.

If the mobile phone determines that the home screen live wallpaper process is the visible process, that is, the home screen live wallpaper process is the visible process, step S507 is performed. If the mobile phone determines that the home screen live wallpaper process is not the visible process, that is, the home screen live wallpaper process is an invisible process, step S508 is performed.

It may be understood that, in step S506, that whether a display module is used by the home screen live wallpaper process is determined by determining whether the home screen live wallpaper process is the visible process is used as an example.

S507: The mobile phone does not release a memory resource of a GPU and the memory resource of the video codec module that are occupied by the home screen live wallpaper process.

S508: The mobile phone releases the memory resource that is of the GPU and that is occupied by the home screen live wallpaper process.

In some embodiments, when the mobile phone performs step S502 to determine that the home screen live wallpaper process belongs to the background process, in addition to performing step S503, the mobile phone may directly release the memory resource that is of the GPU and that is occupied by the home screen live wallpaper process.

It may be understood that, in the embodiment shown in FIG. 5A and FIG. 5B, the home screen live wallpaper process of the mobile phone is used as an example. For another similar application process that occupies the memory resource of the GPU and the memory resource of the video codec module, the method shown in FIG. 5A and FIG. 5B may be used to release a resource occupied by the application process.

Based on the foregoing technical solution, for the home screen live wallpaper process of the mobile phone, the process usually increases a priority of the process to the foreground process by decreasing a value of the ADJ or the procState of the process. In this way, the memory resource that is of the GPU and that is occupied by the home screen live wallpaper process of the mobile phone is not released. However, actually, the home screen live wallpaper process is run in the foreground only when the mobile phone displays a home screen. Therefore, when the home screen live wallpaper process is determined as the foreground process based on the value of the ADJ or the procState, whether the home screen live wallpaper process is a visible process, that is, whether the home screen live wallpaper process is displayed on the home screen, can be determined. When the home screen live wallpaper process is not a visible process, the memory resource that is of the GPU and that is occupied by the home screen live wallpaper process is released, so that the memory resource of the GPU can be released to a maximum extent, thereby further reducing a system load. When the home screen live wallpaper process is a visible process, the memory resource of the GPU, the memory resource of the video codec module, and the like that are occupied by the home screen live wallpaper process are not released, so that the home screen avoidance process can be normally run, thereby ensuring user experience.

Scenario 2: A live video streaming process of a mobile phone is switched from being run in a foreground to being run in a background.

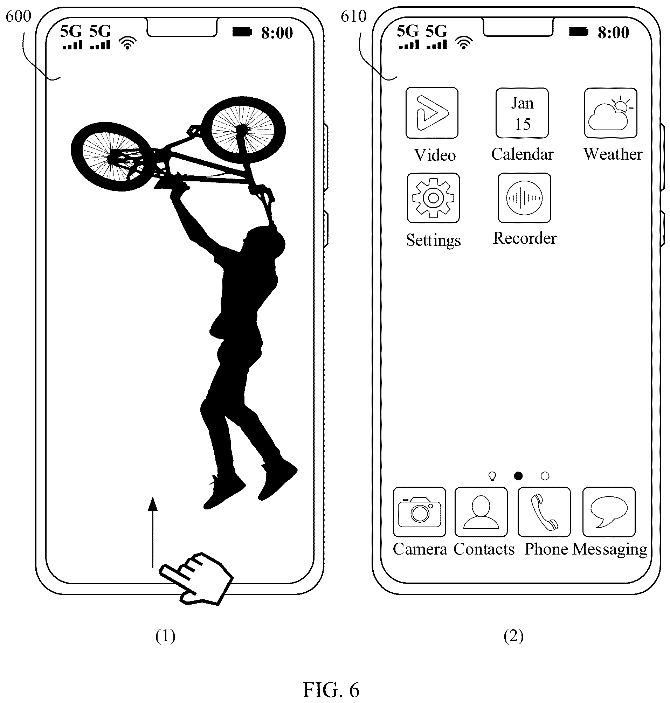

For example, when the live video streaming process is run in the foreground of the mobile phone, the mobile phone may display a live streaming interface 600 shown in (1) in FIG. 6. When the mobile phone detects an operation used to switch the live video streaming process to be run in the background, for example, the operation may include but is not limited to various button operations, voice operations, gesture operations, and the like. For example, the operation is an operation of sliding upward from a bottom of a screen of the mobile phone. In response to the operation, the mobile phone switches the live video streaming process from being run in the foreground to being run in the background. Optionally, the mobile phone may display a main interface 610 shown in (2) in FIG. 6.

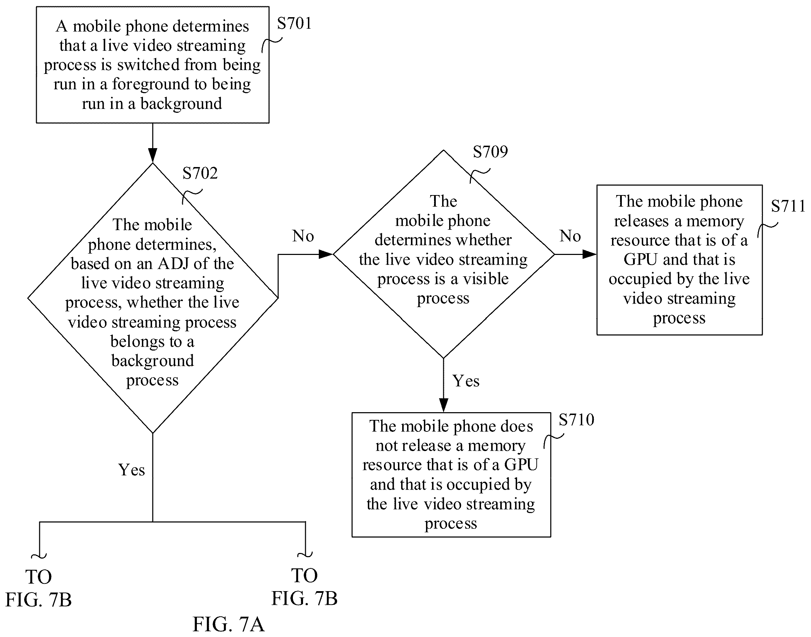

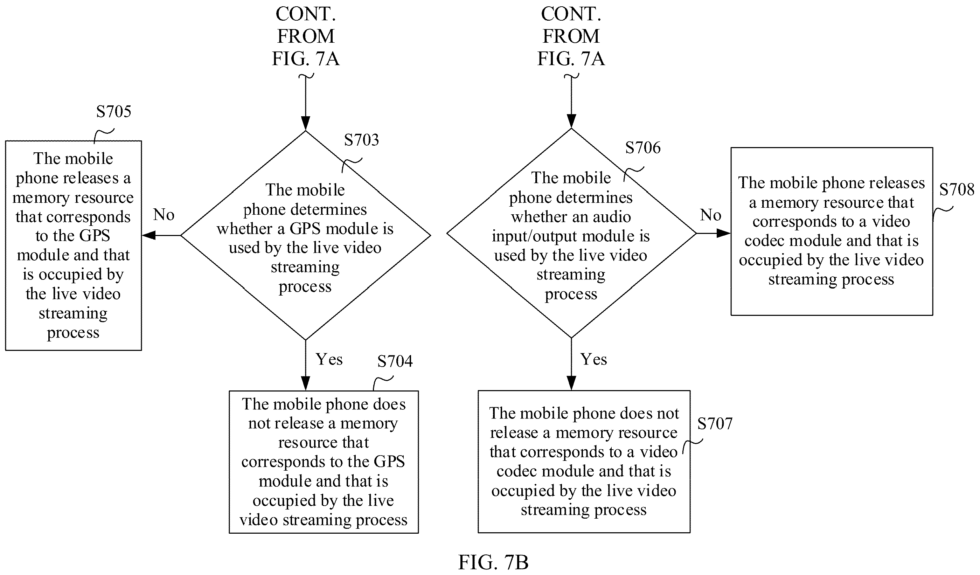

In this scenario, as a specific embodiment, FIG. 7A and FIG. 7B are a schematic flowchart of still another application process management method according to an embodiment of this application. As shown in FIG. 7A and FIG. 7B, the method includes the following steps.

S701: A mobile phone determines that a live video streaming process is switched from being run in a foreground to being run in a background.

For a specific implementation of this step, refer to the related implementation of step S501 shown in FIG. 5A.

S702: The mobile phone determines, based on an ADJ of the live video streaming process, whether the live video streaming process belongs to a background process.

If the mobile phone determines, based on the ADJ of the live video streaming process, that the live video streaming process belongs to the background process, that is, the live video streaming process belongs to the background process, step S703 and step S706 are performed. If the mobile phone determines, based on the ADJ of the live video streaming process, that the live video streaming process does not belong to the background process, that is, the live video streaming process does not belong to the background process, step S709 is performed.

For a specific implementation of this step, refer to the related implementation of step S502 shown in FIG. 5A.

S703: The mobile phone determines whether a GPS module is used by the live video streaming process.

For example, if the live video streaming process performs a background navigation operation, it indicates that the GPS module is used by the live video streaming process.

In some embodiments, the mobile phone may determine, by using a GPS module use list stored in the PowerGenie module in FIG. 2b, whether the GPS module is used by the live video streaming process. For example, if a PID, of an application process that is using the GPS module, included in the GPS module use list includes a PID of the live video streaming process, it may be determined that the GPS module is used by the live video streaming process; or if a PID, of an application process that is using the GPS module, included in the GPS module use list does not include a PID of the live video streaming process, it may be determined that the GPS module is not used by the live video streaming process.

If the mobile phone determines that the GPS module is used by the live video streaming process, that is, the GPS module is used by the live video streaming process, step S704 is performed. If the mobile phone determines that the GPS module is not used by the live video streaming process, that is, the GPS module is not used by the live video streaming process, step S705 is performed.

It may be understood that in this embodiment, an example in which a positioning module is a GPS module is used. In another embodiment, the positioning module may be specifically presented as another module, for example, a BeiDou module. This is not limited in this embodiment of this application.

In some embodiments, after performing step S703, the mobile phone may further first determine whether the live video streaming process occupies a memory resource corresponding to the GPS module, and then perform step S704 or step S705 when determining that the memory resource corresponding to the GPS module is occupied.

In some implementations, the GPS module may store the PID of the application process that occupies the memory resource corresponding to the GPS module, and the mobile phone may determine, based on the PID, of the application process, stored in the GPS module, whether the live video streaming process occupies the GPS module. For example, if the PID, of the application process, stored in the GPS module does not include the PID of the live video streaming process, it may be determined that the live video streaming process does not occupy the memory resource corresponding to the GPS module; or if the PID, of the application process, stored in the GPS module includes the PID of the live video streaming process, it may be determined that the live video streaming process occupies the memory resource corresponding to the GPS module.

Optionally, after performing step S703, the mobile phone determines, in the foregoing implementation, whether the live video streaming process occupies the memory resource corresponding to the GPS module. Alternatively, when a hardware module is used by a specific application process, the application process occupies a resource corresponding to the hardware module. Therefore, after step S703 is performed, if it is determined that the GPS module is not used by the live video streaming process, the mobile phone may further determine, in the foregoing implementation, whether the live video streaming process occupies the memory resource corresponding to the GPS module.

In some other embodiments, before performing step S703, the mobile phone may first determine whether the live video streaming occupies the memory resource corresponding to the GPS module; and when determining that the memory resource corresponding to the GPS module is occupied, perform step S703.

S704: The mobile phone does not release the memory resource that corresponds to the GPS module and that is occupied by the live video streaming process.

S705: The mobile phone releases the memory resource that corresponds to the GPS module and that is occupied by the live video streaming process.

S706: The mobile phone determines whether an audio input/output module is used by the live video streaming process.

For example, if the live video streaming process performs an operation such as voice playing or recording in the background, it indicates that the audio input/output module is used by the live video streaming process.

In some embodiments, the mobile phone may determine, by using an audio input/output module use list stored in the PowerGenie module in FIG. 2b, whether the audio input/output module is used by the live video streaming process. For example, if a PID, of an application process that is using the audio input/output module, included in the audio input/output module use list includes the PID of the live video streaming process, it may be determined that the audio input/output module is used by the live video streaming process; or a PID, of an application process that is using the audio input/output module, included in the audio input/output module use list does not include the PID of the live video streaming process, it may be determined that the audio input/output module is not used by the live video streaming process.

If the mobile phone determines that the audio input/output module is used by the live video streaming process, that is, the audio input/output module is used by the live video streaming process, step S707 is performed. If the mobile phone determines that the audio input/output module is not used by the live video streaming process, that is, the audio input/output module is not used by the live video streaming process, step S708 is performed.

In some embodiments, after performing step S706, the mobile phone may first determine whether the live video streaming process occupies a memory resource corresponding to a video codec module, and then perform step S707 or step S708 when determining that the memory resource corresponding to the video codec module is occupied.

In some implementations, the video codec module may store a PID of an application process that occupies a memory resource corresponding to the video codec module, and the mobile phone may determine, based on the PID, of the application process, stored in the video codec module, whether the live video streaming process occupies the video codec module. For example, if the PID, of the application process, stored in the video codec module does not include the PID of the live video streaming process, it may be determined that the live video streaming process does not occupy the memory resource corresponding to the video codec module; or if the PID, of the application process, stored in the video codec module includes the PID of the live video streaming process, it may be determined that the live video streaming process occupies the memory resource corresponding to the video codec module.

In some other implementations, after performing step S706, the mobile phone may further determine, by determining whether the video codec module is used by the live video streaming process, whether the live video streaming process occupies the memory resource corresponding to the video codec module. For example, when determining that the video codec module is used by the live video streaming process, the mobile phone may determine that the live video streaming process occupies the memory resource corresponding to the video codec module; or when determining that the video codec module is not used by the live video streaming process, the mobile phone may continue to determine, with reference to the foregoing implementation, whether the video codec module is used by the live video streaming process.

In some other embodiments, before performing step S706, the mobile phone may first determine whether the live video streaming process occupies the memory resource corresponding to the video codec module, and then perform step S706 when determining that the memory resource corresponding to the video codec module is occupied.

S707: The mobile phone does not release the memory resource that corresponds to the video codec module and that is occupied by the live video streaming process.

In this way, when the live video streaming process uses the audio input/output module, for example, when there is an audio input or output, a user can perceive the live video streaming process. Therefore, the memory resource that corresponds to the video codec module and that is occupied by the live video streaming process is not released, so that the application process that can be perceived by the user can be avoided from being killed, and user experience can be ensured.

S708: The mobile phone releases the memory resource that corresponds to the video codec module and that is occupied by the live video streaming process.

In this way, when the audio input/output module is not used by the live video streaming process, the memory resource that corresponds to the video codec module and that is occupied by the live video streaming process is released. Because the live video streaming is in a background silent playing scenario, the user cannot perceive the live video streaming. Therefore, the resource that is of the video codec module and that is occupied by the live video streaming process can be released, a system load can be reduced, and user experience can be ensured.

In another embodiment, when the audio input/output module is not used by the live video streaming process, the memory resource that corresponds to the audio input/output module and that is occupied by the live video streaming process may also be released.

S709: The mobile phone determines whether the live video streaming process is a visible process.

If the mobile phone determines that the live video streaming process is the visible process, that is, the live video streaming process is the visible process, step S710 is performed. If the mobile phone determines that the live video streaming process is not the visible process, that is, the live video streaming process is an invisible process, step S711 is performed.

For another implementation of step S709, refer to the related implementation of step S506 shown in FIG. 5B.

S710: The mobile phone does not release a memory resource that is of a GPU and that is occupied by the live video streaming process.

In some embodiments, in addition to performing step S710, when determining that the live video streaming process occupies resources corresponding to the GPS module, the audio input/output module, the video codec module, and the like, the mobile phone may not release the resources corresponding to the GPS module, the audio input/output module, the video codec module, and the like that are occupied by the live video streaming process. In this way, the live video streaming process can be normally run, thereby ensuring user experience.

S711: The mobile phone releases the memory resource that is of the GPU and that is occupied by the live video streaming process.

In some embodiments, when the mobile phone performs step S702 to determine that the live video streaming process belongs to the background process, the mobile phone may further directly release the memory resource that is of the GPU and that is occupied by the live video streaming process when determining that the live video streaming process occupies the memory resource of the GPU.

In some embodiments, when performing step S709 to determine that the live video streaming process is the invisible process, the mobile phone may also determine whether the GPS module, the audio input/output module, the video codec module, and the like are used, to release the corresponding resource.

It may be understood that, in the embodiment shown in FIG. 7A and FIG. 7B, that the mobile phone determines whether all included hardware modules are used by the application process is used as an example. In another embodiment, the mobile phone may alternatively determine whether only a hardware module that has a resource occupied by the application process is used by the application process.

It may be further understood that the embodiment shown in FIG. 7A and FIG. 7B uses releasing a memory resource of the hardware module as an example. In another embodiment, another resource (for example, a processor resource) of the hardware module may alternatively be released.

The foregoing mainly describes the solutions provided in embodiments of this application from the perspective of the method. It may be understood that, to implement the foregoing functions, the device includes corresponding hardware structures and/or software modules for performing the functions. With reference to the units and algorithm steps described in embodiments disclosed in this application, embodiments of this application can be implemented in a form of hardware or combination of hardware and software. Whether a function is performed by hardware or hardware driven by software depends on particular applications and design constraints of the technical solutions. A person skilled in the art may use different methods to implement the described functions for each particular application, but it should not be considered that the implementation goes beyond the scope of the technical solutions in embodiments of this application.

In embodiments of this application, functional modules of the device may be obtained through division based on the foregoing method examples. For example, each functional module may be obtained through division based on each corresponding function, or two or more functions may be integrated into one processing unit. The integrated unit may be implemented in a form of hardware, or may be implemented in a form of a software functional module. It should be noted that, in embodiments of this application, division into the units is an example, and is merely logical function division. During actual implementation, another division manner may be used.

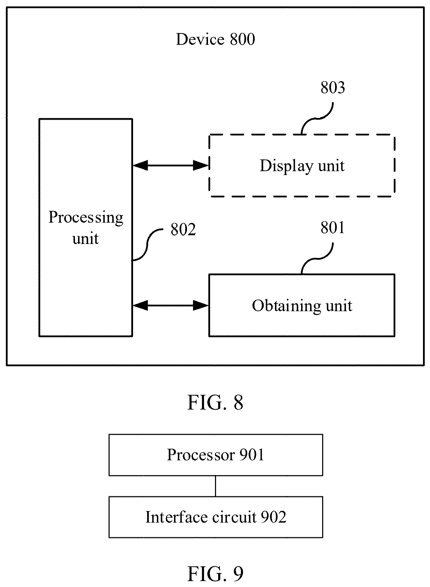

FIG. 8 is a diagram of a structure of a device according to an embodiment of this application. The device 800 may be configured to implement the methods recorded in the foregoing method embodiments. For example, the device 800 may specifically include: an obtaining unit 801 and a processing unit 802.

The obtaining unit 801 is configured to support the device 800 in performing an obtaining function in any one of FIG. 1 to FIG. 7B.

The processing unit 802 is configured to support the device 800 in performing a processing function in any one of FIG. 1 to FIG. 7B.

Optionally, the device 800 shown in FIG. 8 may further include a display unit 803. The display unit 803 may be configured to support the device 800 in performing a display operation.

Optionally, the device 800 shown in FIG. 8 may further include a storage unit (not shown in FIG. 8), and the storage unit stores a program or instructions. When the processing unit 802 executes the program or the instructions, the device 800 shown in FIG. 8 may be enabled to perform the method in the foregoing method embodiments.

Optionally, the device 800 shown in FIG. 8 may further include a communication unit (not shown in FIG. 8). The communication unit is configured to support the device 800 in performing a step of communication between the device and another device in embodiments of this application.

For technical effect of the device 800 shown in FIG. 8, refer to the technical effect of the method in the foregoing method embodiments. Details are not described herein again. The processing unit 802 in the device 800 shown in FIG. 8 may be implemented by a processor or a processor-related circuit component, and may be a processor or a processing module. The communication unit may be implemented by a transceiver or a transceiver-related circuit component, and may be a transceiver or a transceiver module. The display unit may be implemented by a displayrelated component.

An embodiment of this application further provides a chip system. As shown in FIG. 9, the chip system includes at least one processor 901 and at least one interface circuit 902. The processor 901 and the interface circuit 902 may be connected to each other through a line. For example, the interface circuit 902 may be configured to receive a signal from another apparatus. For another example, the interface circuit 902 may be configured to send a signal to another apparatus (for example, the processor 901). For example, the interface circuit 902 may read instructions stored in a storage, and send the instructions to the processor 901. When the instructions are executed by the processor 901, a device is enabled to perform the steps performed by the device in the foregoing embodiments. Certainly, the chip system may further include another discrete component. This is not specifically limited in this embodiment of this application.

Optionally, there may be one or more processors in the chip system. The processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the storage.

Optionally, there may also be one or more storages in the chip system. The storage may be integrated with the processor, or may be disposed separately from the processor. This is not limited in this application. For example, the storage may be a non-transitory processor, for example, a read-only memory ROM. The storage and the processor may be integrated into a same chip, or may be separately disposed on different chips. A type of the storage and a manner of disposing the storage and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable controller (programmable logic device, PLD), or another integrated chip.

It should be understood that the steps in the foregoing method embodiments may be completed through an integrated logic circuit of hardware in the processor or by using instructions in a form of software. The steps of the method disclosed with reference to embodiments of this application may be directly performed by a hardware processor, or may be performed through a combination of hardware in the processor and a software module.

An embodiment of this application further provides a storage medium. The storage medium stores instructions; and when the instructions are run on a device, the device is enabled to perform the method in the foregoing method embodiments.

An embodiment of this application provides a program product. The program product includes a program or instructions; and when the program or the instructions are run on a device or a computer, the device or the computer is enabled to perform the method in the foregoing method embodiments.

In addition, an embodiment of this application further provides an apparatus. The apparatus may be specifically a chip, a component, or a module. The apparatus may include a processor and a storage that are connected to each other. The storage is configured to store executable instructions; and when the apparatus runs, the processor may execute the executable instructions stored in the storage, to enable the apparatus to perform the method in the foregoing method embodiments.

The device, the storage medium, the program product, or the chip provided in embodiments may be configured to perform the corresponding method provided above. Therefore, for beneficial effect that can be achieved, refer to the beneficial effect of the corresponding method provided above. Details are not described herein again.

Based on the descriptions about the foregoing implementations, a person skilled in the art may understand that, for a purpose of convenient and brief description, division into the foregoing functional modules is used as an example for illustration. During actual application, the foregoing functions may be allocated to different functional modules and implemented based on requirements. In other words, an inner structure of an apparatus is divided into different functional modules to implement all or some of the functions described above.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a singlechip microcomputer, a chip, or the like) or a processor (processor) to perform all or some of the steps of the methods described in embodiments of this application. The foregoing storage medium includes various media that can store program code, for example, a USB flash drive, a removable hard disk drive, a read-only memory (read-only memory, ROM), a random access memory (random access memory, RAM), a magnetic disk, or an optical disc.

The foregoing content is merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An application process management method, applied to a device, wherein the method comprises:
obtaining a value of a target parameter corresponding to an application process and a state of a hardware module comprised in the device, wherein the value of the target parameter is used to determine whether the application process belongs to a background process, and the state of the hardware module is used to determine whether the hardware module is used by the application process; and
managing the application process based on the value of the target parameter corresponding to the application process and the state of the hardware module.

2. The method according to claim 1, wherein obtaining the value of the target parameter corresponding to the application process and the state of the hardware module comprised in the device comprises:
obtaining the value of the target parameter corresponding to the application process; and
when the value of the target parameter corresponding to the application process represents that the application process belongs to the background process, obtaining a state of a first hardware module comprised in the device, wherein the first hardware module belongs to a first-type hardware module, and the first-type hardware module is a corresponding hardware module when an application process in the device is run in a background.

3. The method according to claim 2, wherein managing the application process based on the value of the target parameter corresponding to the application process and the state of the hardware module comprises:
if it is determined, based on the state of the first hardware module, that the first hardware module is not used by the application process, when the application process occupies a resource corresponding to the first hardware module, releasing the resource that corresponds to the first hardware module and that is occupied by the application process; or
if it is determined, based on the state of the first hardware module, that the first hardware module is used by the application process, when the application process occupies a resource corresponding to the first hardware module, skipping releasing the resource that corresponds to the first hardware module and that is occupied by the application process.

4. The method according to claim 3, wherein
determining, based on the state of the first hardware module, that the first hardware module is not used by the application process comprises:
if a target process identifier PID does not comprise a PID of the application process, determining that the first hardware module is not used by the application process, wherein the target PID is a PID of an application process that uses the first hardware module; or
determining, based on the state of the first hardware module, that the first hardware module is used by the application process comprises:
if a target PID comprises a PID of the application process, determining that the first hardware module is used by the application process, wherein the target PID is the PID of the application process that uses the first hardware module.

5. The method according to any one of claims 2 to 4, wherein the first-type hardware module comprises at least one of a positioning module, an audio input/output module, and a video codec module.

6. The method according to claim 1, wherein obtaining the value of the target parameter corresponding to the application process and the state of the hardware module comprised in the device comprises:
obtaining the value of the target parameter corresponding to the application process; and
when the value of the target parameter corresponding to the application process represents that the application process belongs to a foreground process, obtaining a state of a second hardware module comprised in the device, wherein the second hardware module belongs to a second-type hardware module, and the second-type hardware module is a corresponding hardware module when an application process in the device is run in a foreground.

7. The method according to claim 6, wherein managing the application process based on the value of the target parameter corresponding to the application process and the state of the hardware module comprises:
if it is determined, based on the state of the second hardware module, that the second hardware module is not used by the application process, when the application process occupies a resource corresponding to the second hardware module, releasing the resource that corresponds to the second hardware module and that is occupied by the application process; or
if it is determined, based on the state of the second hardware module, that the second hardware module is used by the application process, when the application process occupies a resource corresponding to the second hardware module, skipping releasing the resource that corresponds to the second hardware module and that is occupied by the application process.

8. The method according to claim 7, wherein
determining, based on the state of the second hardware module, that the second hardware module is not used by the application process comprises:
if the application process is an invisible process, determining that the second hardware module is not used by the application process; or
determining, based on the state of the second hardware module, that the second hardware module is used by the application process comprises:
if the application process is a visible process, determining that the second hardware module is used by the application process.

9. The method according to claim 7 or 8, wherein the second hardware module comprises a display module, and the resource corresponding to the second hardware module comprises a memory resource of a graphics processing unit GPU.

10. The method according to claim 1, wherein obtaining the value of the target parameter corresponding to the application process and the state of the hardware module comprised in the device comprises:
obtaining the value of the target parameter corresponding to the application process; and
when the value of the target parameter corresponding to the application process represents that the application process belongs to the background process, obtaining a state of an audio input/output module comprised in the device; and
managing the application process based on the value of the target parameter corresponding to the application process and the state of the hardware module comprises:
when determining, based on the state of the audio input/output module, that the audio input/output module is not used by the application process, and determining that the application process occupies a resource corresponding to a video codec module, releasing the resource that corresponds to the video codec module and that is occupied by the application process; or
when determining, based on the state of the audio input/output module, that the audio input/output module is used by the application process, and determining that the application process occupies a resource corresponding to a video codec module, skipping releasing the resource that corresponds to the video codec module and that is occupied by the application process.

11. The method according to any one of claims 1 to 10, wherein the target parameter comprises an ADJ or a process state proState.

12. A device, comprising a processor and a storage, wherein the storage is coupled to the processor, the storage is configured to store computer program code, and the computer program code comprises computer instructions; and when the processor reads the computer instructions from the storage, the device is enabled to perform the method according to any one of claims 1 to 11.

13. A computer-readable storage medium, wherein the computer-readable storage medium comprises a computer program; and when the computer program is run on a device, the device is enabled to perform the method according to any one of claims 1 to 11.

14. A computer program product, wherein the computer program product comprises a computer program or instructions; and when the computer program or the instructions are run on a computer, the computer is enabled to perform the method according to any one of claims 1 to 11.
